# EUROPÄISCHE PATENTSCHRIFT

(11) **EP 2 184 538 B1**
(45) Veröffentlichungstag und Bekanntmachung des Hinweises auf die Patenterteilung: **22.12.2010**
(21) Anmeldenummer: 08168653.7
(22) Anmeldetag: 07.11.2008
(51) Int. Cl.: F23C 3/00, F23D 14/66, F23L 15/02

(54) **Regenerator-FLOX-Brenner**
Regenerator FLOX burner
Brûleur FLOX à régénérateur

(43) Veröffentlichungstag der Anmeldung: 12.05.2010
(73) Patentinhaber: WS-Wärmeprozesstechnik GmbH, 71272 Renningen (DE)
(72) Erfinder: Wünning, Joachim A., 71229 Leonberg (DE); Wünning, Joachim G., 71229 Leonberg (DE)
(74) Vertreter: Rüger, Barthelt & Abel Patentanwälte

(56) Entgegenhaltungen:
- DE-A1- 4 420 477
- US-A- 6 036 476
- US-B1- 6 488 076
- US-B1- 6 880 619

## Beschreibung

Die Erfindung betrifft einen Brenner zum Beheizen von Öfen, insbesondere abgeschlossener Ofenräume oder zur Beheizung von Innenräumen von Strahlrohren durch flammenlose Oxidation (FLOX^{®}).

Zur Luftvorwärmung werden an Brennern entweder Rekuperatoren oder Regeneratoren eingesetzt. Die US-B1 6 488 076 offenbart eine Heizeinrichtung mit zwei Brennern in einem U-förmigen Brennraum, in dessen Zweigen als Regeneratoren angeordnet sind. Jedem Regenerator ist eienr der beiden Brenner individuell zugeordnet. Die Brenner werden abwechselnd betrieben.

Rekuperatoren sind Wärmetauscher, die zur Vorwärmung der Verbrennungsluft Abgashitze nutzen wobei der Wärmestrom durch eine Trennwand fließt. Dagegen sind Regeneratoren Wärmespeicher, die abwechselnd von Abgas und von Verbrennungsluft durchströmt werden, um sich in einer Phase aufzuheizen und dadurch das Abgas abzukühlen und um in einer anderen Phase die aufgenommene Wärme auf die Verbrennungsluft zu übertragen. Die Regeneratortechnik erbringt einen höheren Wärmerückgewinnungsgrad bei gegebenem Bauvolumen, macht aber auch einen beträchtlichen Aufwand für das periodische Umschalten von Abgasbetrieb zum Frischluftbetrieb nötig. Regeneratorbrenner wurden in der Vergangenheit gerne bei relativ hohen Leistungen eingesetzt. Sie werden aber auch zunehmend für Brenner in mittleren Leistungsbereichen nachgefragt.

Aus der DE 44 20 477 A1 sind Industriebrenner mit regenerativer Luftvorwärmung bekannt. Ein solcher Industriebrenner ist für einen mittleren Leistungsbereich von 50 bis 300 kW geeignet. Er weist in der Ofenwand liegende Regeneratorpatronen auf, bei denen die Temperatur der Abgase schon in der Ofenwand abgebaut wird. An der heißen Seite der Regeneratorpatronen sind Düsen angeordnet, aus denen die vorgewärmte Luft mit hoher Geschwindigkeit austritt. Dadurch wird eine starke Abgasrezirkulation in dem Ofen erzeugt. Die damit bewirkte flammenlose Oxidation (FLOX^{®}-Prinzip) ist bei hoher Luftvorwärmung besonders geeignet, um die thermische NOx-Bildung zu vermeiden und die Temperaturgleichmäßigkeit im Ofen zu verbessern. Umschaltventile zum Umschalten der einzelnen Regeneratorpatronen von Wärmeaufnahme auf Wärmeabgabe sind an dem Brennerkopf angeordnet.

Solche Brenner haben sich für die direkte Beheizung von Öfen seit vielen Jahren bewährt. Bei einer Ofentemperatur von z.B. 1100°C wird eine Luftvorwärmung von 950°C erreicht. Bei Erdgas als Brennstoff entspricht dies einem Feuerungswirkungsgrad von ungefähr 85%. Das Abgas wird dabei nicht immer vollständig über die Regeneratoren abgeleitet. Es kann ein gewisser Teilstrom in andere Bereiche, wie beispielsweise eine Vorwärmzone eines Durchlaufofens geleitet werden, um das zu behandelnde Gut vorzuwärmen.

Es ist auch bekannt, Ofenräume indirekt durch Strahlrohre zu beheizen. Ein solches Strahlrohr umschließt einen Innenraum, der durch einen Brenner erwärmt wird. Das Strahlrohr wird dabei auf eine so hohe Temperatur erhitzt, dass es den Ofenraum durch seine Strahlungswärme aufheizt. Bei solchen Strahlrohren tritt das NOx-Problem in den Vordergrund, weil die Temperatur im Inneren des Strahlrohrs höher ist als im Ofen. Außerdem wird die Rezirkulation, die zur Aufrechterhaltung der flammenlosen Oxidation nötig ist, wegen des begrenzten freien Strömungsquerschnitts behindert. Um dennoch die gewünschte Rezirkulation und flammenlose Oxidation zu erhalten, sollte der Impuls der Luft an den Austrittsdüsen erhöht werden, die den Verbrennungsluftstrom in das Innere des Strahlrohrs leiten.

Strahlrohre werden in der Regel mit einem Innendruck betrieben, der etwa dem Außendruck entspricht. Deshalb wird der Abgasteilstrom, der dem Strahlrohr zu entnehmen ist, über ein Abgasgebläse durch die Regeneratoranordnung hindurch abgesaugt. Wegen des Strömungswiderstands der Regeneratoren und des wegen der hohen Strömungsgeschwindigkeit hohen Strömungswiderstands der Luftdüsen und des daraus entstehenden Druckgefälles muss das Abgasgebläse eine hohe Druckdifferenz überwinden. Der Druckverlust im Brenner steigt dabei mit dem Quadrat der Strömungsgeschwindigkeit an den Luftdüsen.

Die genannten Probleme sind zur Anwendung der flammenlosen Oxidation zur Beheizung geschlossener oder abgeschlossener Räume zu lösen. Insbesondere soll die Gebläseleistung möglichst gering sein. Der feuerungstechnische Wirkungsgrad soll möglichst gesteigert werden.

Diese Aufgabe wird mit dem Brenner nach Anspruch 1 sowie dem zugehörigen Verfahren nach Anspruch 14 gelöst:
Erfindungsgemäß wird zur Luftvorheizung bei einem FLOX-Brenner zur Beheizung geschlossener oder abgeschlossener Räume eine Regeneratoranordnung eingesetzt, die Regeneratoren aufweist, die abwechselnd im Abgasstrom aufgeheizt werden und dann von Verbrennungsluft durchströmt werden, um die aufgenommene Wärme an die Verbrennungsluft abzugeben und sich dabei abzukühlen. Die Regeneratoranordnung weist wenigstens einen Bypasskanal auf, mittels dessen ein Abgasteilstrom unter Umgehung der Regeneratorkanäle aus dem durch flammenlose Oxidation zu beheizenden Raum heraus zu einer Abgas-Absaugeinrichtung leitbar ist.

Der Bypasskanal trägt so wesentlich zur Verringerung der Druckverluste an dem Brenner bei, dass die Gebläseleistung des Abgas-Absaugegebläses wesentlich reduziert werden kann. Damit sinken die Betriebskosten des Brenners. Beispielsweise ist eine Senkung des Energieverbrauchs des Abgas-Absaugegebläses um ca. 35% möglich.

Der Bypasskanal kann im einfachsten Fall einen Teil des Abgasstroms thermisch ungenutzt zu dem Abgasgebläse leiten. Schon dies bewirkt eine Verminderung der Abgasgebläseleistung. Vorzugsweise aber wird der in dem Bypasskanal geführte Abgasstrom einer thermischen Nutzung zugeführt. In einer ersten Ausführungsform umspült der im Bypasskanal geführte Abgasstrom dazu die Außenflächen der Regeneratorpatronen. Somit befinden sich die Generatorpatronen in heißer bzw. durch Abgase aufgeheizter Umgebung. Dies steigert den ohnehin hohen feuerungstechnischen Wirkungsgrad weiter, der durch die Regeneratoren zu erreichen ist.

Ergänzend oder alternativ ist es möglich, den im Bypasskanal geführten Abgasteilstrom ganz oder teilweise mittels eines Wärmetauschers, beispielsweise eines Gegenstromwärmetauschers (der auch als Rekuperator bezeichnet wird) thermisch zu nutzen. Mit einem solchen Rekuperator kann beispielsweise der dem Brenner zugeführte Gasstrom oder auch ein Teil der Verbrennungsluft vorgewärmt werden. Die Gasvorwärmung ist insbesondere sinnvoll, wenn so genannte Schwachgase, d.h. Gase mit geringem Heizwert, dafür aber hohem Volumenstrom in den Brennraum geführt werden. Bei solchen heizwertarmen Brenngasen, wie z.B. Gichtgas oder sonstigen Restgasen, steigt das Verhältnis der Volumenströme von Abgas und Luft bis auf Werte von 2 an. Hier kann es sinnvoll sein, den Bypassstrom relativ groß, z.B. größer als 20% des gesamten Abgasstroms, zu machen und den Rekuperator gezielt zur Gasvorwärmung zu nutzen.

Ergänzend oder alternativ ist es wie erwähnt auch möglich, einen Teil des Verbrennungsluftstroms über die Regeneratoren und einen anderen Teil des Verbrennungsluftstroms über den Rekuperator zu erwärmen, der seinerseits von dem Bypassstrom beheizt wird. Parallel dazu kann der Abgasbypassstrom die Regeneratoren außen umspülen.

Heizwertereiche Brenngase, z.B. Propan, Erdgas, Koksgas werden dem Brenner vorzugsweise ohne Vorwärmung zugeführt. Der Bypassstrom, der ausschließlich zur Luftvorwärmung genutzt wird, soll ungefähr 20% betragen. Der Bypassstrom kann durch Einsetzen einer geeigneten Bypassblende eingestellt werden, um optimale Bedingungen einzustellen. Damit wird praktisch ohne Mehraufwand der Saugzug für das Abgas erheblich verringert und gleichzeitig der Außenmantel der Regeneratoren für eine rekuperative Wärmerückgewinnung ausgenutzt.

Weitere Einzelheiten vorteilhafter Ausführungsformen der Erfindung ergeben sich aus der Zeichnung, der Beschreibung oder den Ansprüchen. Die Beschreibung beschränkt sich auf wesentliche Aspekte der Erfindung und sonstiger Gegebenheiten. Die Zeichnung ist ergänzend heranzuziehen. Sie offenbart weitere Details. Es zeigen:
Fig. 1 einen Ofenraum mit Strahlrohr und zur Beheizung desselben eingesetzten Regeneratorbrenner in schematischer, teilweise geschnittener Darstellung.
Fig. 2 den Regeneratorbrenner nach Fig. 1 im Vertikalschnitt.
Fig. 3 den Regeneratorbrenner nach Fig. 2 in einer ausschnittsweisen Längsschnittdarstellung.
Fig. 4 eine abgewandelte Ausführungsform des Regeneratorbrenners in schematisiertem Querschnitt, und
Fig. 5 den Regeneratorbrenner nach Fig. 4 in einem ausschnittsweisen Längsschnitt.

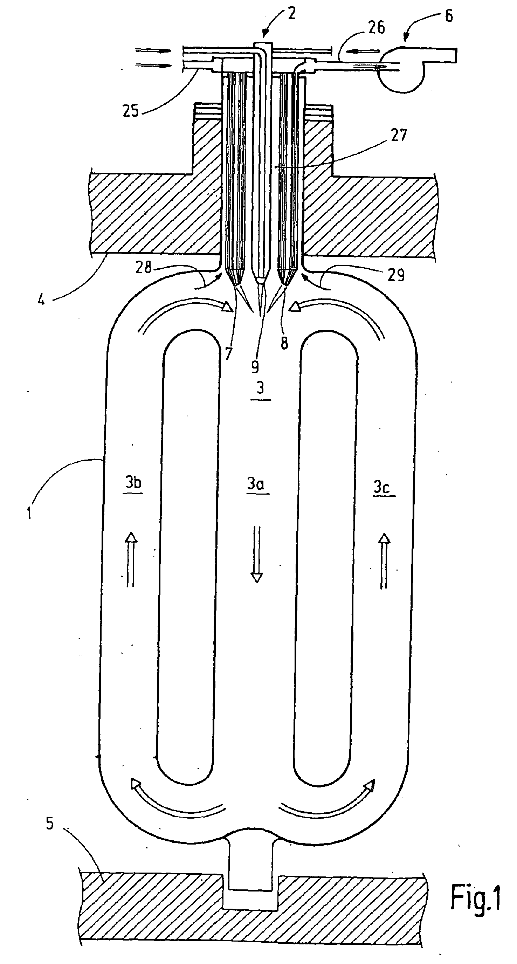

In Fig. 1 ist ein zur Beheizung eines Strahlrohrs 1 eingesetzter Regeneratorbrenner 2 veranschaulicht. Das Strahlrohr 1 besteht beispielsweise aus Stahl oder Keramik. Es umschließt einen Innenraum 3 mit einem mittleren Rohrabschnitt 3a und ein, zwei oder mehreren dazu parallelen länglichen Rohrabschnitten 3b, 3c. Das Strahlrohr 1 ist an einem Ende geschlossen. Der Regeneratorbrenner 2 ist an dem gegenüberliegenden Ende angeordnet. Er dient sowohl der Luft- und Brennstoffzufuhr wie auch der Abgasabfuhr.

Das Strahlrohr 1 ist zwischen zwei Ofenwänden 4, 5 angeordnet und dient der Erwärmung des von den Ofenwänden 4, 5 umschlossenen Innenraums durch Strahlungswärme. Die in dem Innenraum 3 herrschende Temperatur liegt in der Regel deutlich über der in dem Ofenraum herrschenden Temperatur.

Der Regeneratorbrenner 2 hält eine starke, in Fig. 1 durch Pfeile angedeutete Zirkulationsströmung aufrecht, indem er vorgeheizte Verbrennungsluft und Brennstoff zentral in den Rohrabschnitt 3a des Innenraums mit hohem Austrittsimpuls einbläst bzw. injiziert. Ein Teil des rezirkulierenden Abgases wird durch den Regeneratorbrenner 2 hindurch abgesaugt. Dazu dient ein Abgas-Absaugegebläse 6.

Der Regeneratorbrenner 2 ist in der Ofenwand 4. Er weist Luftdüsen 7, 8 und mindestens eine Brennstoffdüse 9 auf. Aus den Luftdüsen 7, 8 tritt die vorgeheizte Verbrennungsluft mit hoher Austrittsgeschwindigkeit aus. Vorzugsweisebeträgt sie zumindest an den Luftdüsen 7 und 8 des Innenraums 3 über 100 m/s, vorzugsweise werden mindestens 150 m/s erreicht. Durch die hohe Strömungsgeschwindigkeit einerseits und den hohen Abgasanteil des sich ausbildenden Gasgemisches, tritt eine flammenlose Oxidation ein, bei der der in den Innenraum 3 eingetragene Brennstoff nicht lokal, sondern über einen großen Bereich des Innenraums 3 verteilt oxidiert und somit seine Wärme gleichmäßig und mit geringster NOx-Produktion freisetzt.

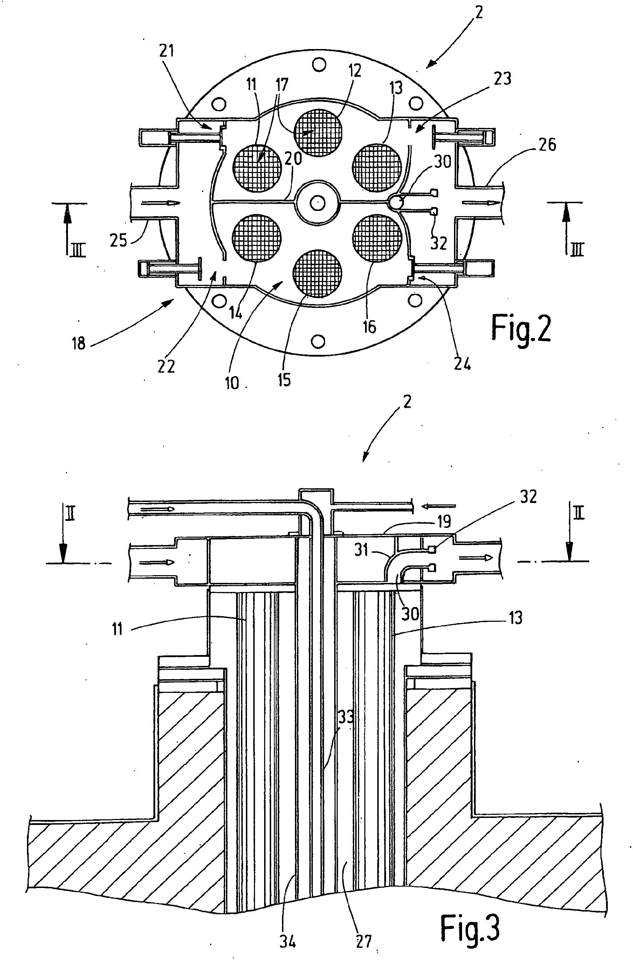

Der Regeneratorbrenner 2 geht aus den Figuren 2 und 3 näher hervor. Er weist eine Regeneratoreinheit 10 auf, die mehrere Regeneratoren 11, 12, 13, 14, 15, 16 enthält. Diese sind beispielsweise als Patronen mit zylindrischem Außenmantel ausgebildet. Sie weisen innen eine Vielzahl verzweigter Kanäle 17 auf, die als Regeneratorkanäle dienen und durch die das abzukühlende Abgas und die aufzuwärmende Verbrennungsluft abwechselnd geführt werden.

Die im Ausführungsbeispiel vorhandenen sechs Regeneratoren 11 bis 16 sind in zumindest zwei Gruppen eingeteilt, die abwechselnd Wärme aufnehmen und Wärme abgeben (die Gruppen können jeweils eine beliebige Anzahl von Regeneratoren umfassen). Das Umschalten der Regeneratoren wird durch eine Steuereinheit 18 bewirkt. Sie umfasst ein flaches geschlossenes Gehäuse 19, von dessen Boden sich die parallel zueinander auf einem Kreis um die Brennermittelachse herum angeordneten Regeneratoren 11 bis 16 weg erstrecken. Das Gehäuse 19 enthält eine Trennwand 20, die den Innenraum in zwei Kammern unterteilt. Die Regeneratoren 11, 12, 13, der ersten Gruppe, sind an eine dieser Kammern angeschlossen, während die Regeneratoren 14, 15, 16 der anderen Gruppe an die andere Kammer angeschlossen sind. Jede der Kammern ist jeweils mit einem Einlassventil 21, 22 und einem Auslassventil 23, 24, versehen. Die Einlassventile 21, 22 sind an einen Verbrennungsluftkanal 25 angeschlossen. Die Auslassventile 23, 24, sind an einen Abgaskanal 26 angeschlossen. Den Ventilen 21 bis 24 sind nicht weiter bezeichnete, in Fig. 1 schematisch dargestellte Ventilantriebe, beispielsweise in Form von Motorantrieben, Magnetantrieben, Hydraulikantrieben, Pneumatikantrieben oder dergleichen zugeordnet. Sie dienen dazu, die Ventile 21 bis 24 so zu betätigen, dass die Regeneratorgruppen abwechselnd und alternierend mit dem Verbrennungsluftkanal 25 und dem Abgaskanal 26 verbunden werden. Letzterer führt zu dem Abgas-Absaugegebläse 6.

Die Regeneratoren 11 bis 16 sind in einem Volumen 27 angeordnet, das von einem Abgasteilstrom durchströmt ist. Dieser ist in Fig. 1 durch kleine Pfeile 28, 29 symbolisiert. Eine Öffnung 30 in dem Boden des Gehäuses 19 führt z.B. über ein Rohr 31 zu einer Blende 32, die als Drossel zur Einstellung des Abgasteilstroms dient. Die Blende 32 kann auswechselbar gestaltet sein. Sie mündet in einen Teilraum des Gehäuses 19, an den der Abgaskanal 26 angeschlossen ist.

Der Regeneratorbrenner 2 weist außerdem ein zentrales Gaszuführungsrohr 33 auf, das an der Brennstoffdüse 9 (Fig. 1) mündet. Das Gaszuführungsrohr 33 kann von einem Luftzuführungsrohr 34 umgeben sein, das der Zuführung von Luft beim Zünden des Brenners dient und danach inaktiv ist oder nur einen geringen Verbrennungsluftstrom führt.

Der insoweit beschriebene Regeneratorbrenner 2 ist insbesondere für Gase mit hohem Heizwert geeignet. Er arbeitet wie folgt:
In Betrieb erzeugt das Abgas-Absaugegebläse 6 einen Saugzug, über den Abgas aus dem Strahlrohr 3 abgesaugt wird. Bei der Ventilstellung nach Fig. 2 strömt dabei Abgas durch die Regeneratoren 11, 12 und 13 sowie durch den Bypasskanal, der hier durch das Volumen 27 gebildet wird. Der durch die Blende 32 begrenzte Abgasteilstrom des Bypasskanals macht etwa 20% des gesamten Abgasstroms aus. Die zuvor aufgeheizten Regeneratoren 14, 15, 16 werden mit Frischluft beaufschlagt und heizen die Luft auf, die dann durch die Verbrennungsluftdüsen als Luftstrahl austritt. Die heißen Verbrennungsluftstrahlen aus den Luftdüsen 7, 8 vermischen sich mit dem beigesaugten Abgas und dem aus der Brennstoffdüse 9 austretenden Brennstoff, der dann entlang des Abschnitts 3a und ggf. auch noch in den Abschnitten 3b, 3c oxidiert.

Der durch den Bypasskanal 27 fließende Abgasteilstrom gibt seine Wärme an die Außenflächen der Regeneratoren 11 bis 16 ab. Durch diese Maßnahme wird einerseits ohne Mehraufwand der Saugzug für das Abgas erheblich verringert und gleichzeitig der Außenmantel der Regeneratoren 11 bis 16 für eine rekuperative Wärmegewinnung genutzt.

Ein ausgeführtes Versuchsbeispiel eines solchen Regeneratorbrenners 2 in einem Strahlrohr mit insgesamt sechs, jeweils in Dreiergruppen angeordneten Regeneratorpatronen 11 bis 16 hat beispielsweise einen Anschlusswert von 140 kW Erdgas. Um bei einer Abgaseintrittstemperatur von 1000°C und einer Luftvorwärmung von ca. 900°C einen NOx-Wert kleiner 50 ppm zu erreichen ist eine Luftgeschwindigkeit von 150 m/s an den Luftdüsen 7, 8 für eine starke Rezirkulation vorgesehen. In dem Inneren des Strahlrohrs wird ungefähr Atmosphärendruck eingehalten. Deshalb wird der Strömungswiderstand des Regenerators mit der Düse im Abgasbetrieb von einem Abgas-Absaugegebläse überwunden. Folgende Messergebnisse stellen sich ein:

| | **Abgasbypass** | |
|---|---|---|
| | **ohne** | **20%** |
| Abgaseintritt in die Düse | 1000°C | 1000°C |
| Abgas am Brennerausgang | 300°C | 260°C |
| Luftvorwärmung | 840°C | 890°C |
| Wärmerückgewinnung | 50 kW | 53 kW |
| Feuerungstechnischer Wirkungsgrad | 86% | 88% |
| Druckverlust Abgasseite | 120 mbar | 80 mbar |
| Abgasgebläse, Verbrauch | 1800 W | 1200 W |
| NOx im Abgas | 30 ppm | 30 ppm |

Es zeigt sich, dass die Wärmerückgewinnung mit Bypass um ca. 5% höher liegt als ohne Verwendung eines Bypasses. Außerdem ist der Energieverbrauch des Abgas-Absaugegebläses um ca. 35% vermindert. Ein derartiger Anstieg des feuerungstechnischen Wirkungsgrads im Prozentbereich ist mit anderen Mitteln nur mit erheblichem Aufwand zu erreichen, wohingegen durch den Abgasbypass praktisch kein Zusatzaufwand entsteht.

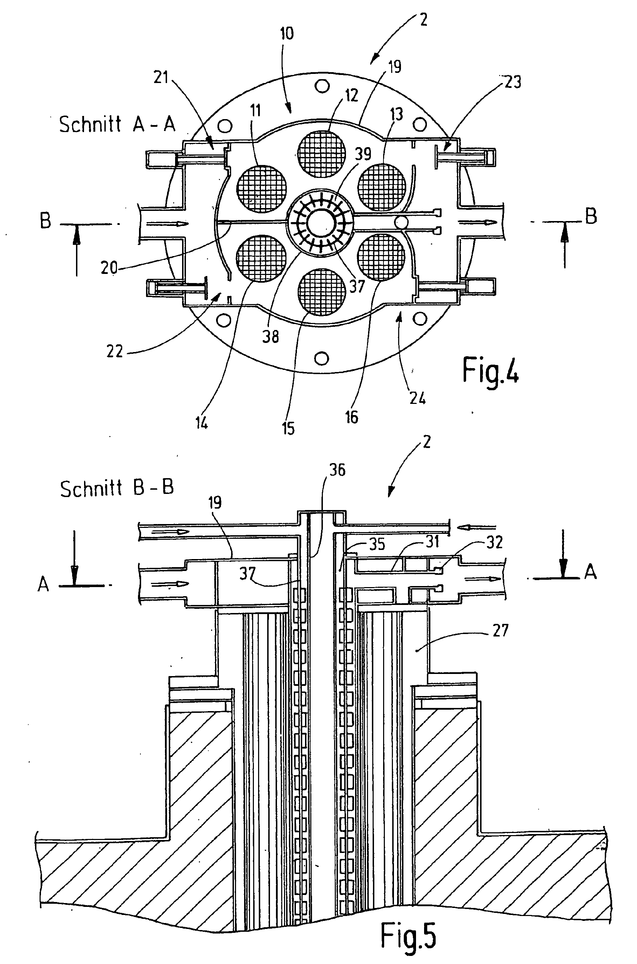

Bei dem in den Figuren 1 bis 3 veranschaulichten Ausführungsbeispiel findet eine Vorwärmung des Brennstoffs nicht oder nicht in nennenswertem Maße statt. Es ist aber auch möglich, den Brennstoffstrom z.B. rekuperativ vorzuwärmen. Dies ist insbesondere bei Brennstoff, insbesondere Gasen mit niedrigem Heizwert sinnvoll. Ein dafür ausgelegter Brenner ist den Figuren 4 und 5 zu entnehmen. Dieser zeichnet sich dadurch aus, dass der Bypasskanal 27 ganz oder teilweise zur rekuperativen Brenngasvorwärmung genutzt wird. Zur Gaszuführung dient ein Gaszuführungskanal 35, der zwischen dem Außenmantel eines zentralen, zum Starten und sonst vorzugsweise inaktiven Luftzuführrohrs 36 und der Innenseite eines Rekuperatorrohrs 37 ausgebildet ist. Das Rekuperatorrohr kann innen und außen mit Vorsprüngen, Flossen oder dergleichen versehen sein, um den Wärmeübergang zu verbessern. Der äußere Mantel des Rekuperatorrohrs wird von einem Abgasteilstrom umströmt. Dazu kann das Rekuperatorrohr 37 in einem weiteren Rohr 38 angeordnet sein. Der zwischen dem Rekuperatorrohr 37 und dem äußeren Rohr 38 ausgebildete Abgaskanal 39 bildet einen Bypass, in dem ein Abgasstrom an den Regeneratoren 11 bis 16 vorbei geleitet wird. Der Kanal 39 kann den einzigen und gesamten Bypass bilden. Es ist aber auch möglich, zusätzlich einen Teil des an den Regeneratoren 11 bis 16 im Bypass vorbeigeführten Abgases durch das Volumen 27 zu leiten, um die Regeneratoren 11 bis 16 an ihrem Außenmantel mit heißem Abgas zu umspülen. Dazu kann das Rohr 31, wie in Fig. 5 veranschaulicht, verzweigt sein, um einerseits Abgas aus dem Kanal 39 und andererseits Abgas aus dem Volumen 27 abzusaugen. Wiederum ist die Blende 32 zur Regulierung der Größe des Abgasteilstroms vorgesehen.

Für den insoweit beschriebenen Regeneratorbrenner 2 nach Fig. 4 bis 5 gilt die Beschreibung des Regeneratorbrenners 2 nach Fig. 1 bis 3 ergänzend, unter Zugrundelegung gleicher Bezugszeichen entsprechend.

Zur Verbesserung des Wirkungsgrads eines Regeneratorbrenners zur Beheizung von Strahlrohren oder ähnlichen abgeschlossenen engen Räumen wird ein Teilstrom des Abgases über die Außenmäntel der Regeneratorpatronen 11 bis 16 geleitet und durch eine Bypassblende 32 im Brennerkopf abgeführt. Bei Heizwert reichen Brenngasen, z.B. Propan, Erdgas, Koksgas, soll der Teilstrom ungefähr 20% betragen. Die Bypassblende kann ausgewechselt werden, um Optimalbedingungen einzustellen. Damit wird praktisch ohne Mehraufwand der erforderliche Saugzug für das Abgas erheblich verringert und gleichzeitig der Außenmantel der Regeneratoren 11 bis 16 für eine rekuperative Wärmerückgewinnung ausgenutzt.

### Bezugszeichen:

- 1: Strahlrohr
- 2: Regeneratorbrenner
- 3: Innenraum
- 3a-c: Abschnitte
- 4, 5: Ofenwände
- 6: Abgas-Absaugegebläse
- 7, 8: Luftdüsen
- 9: Brennstoffdüse
- 10: Regeneratoranordnung
- 11-16: Regeneratoren
- 17: Kanäle
- 18: Steuereinheit
- 19: Gehäuse
- 20: Trennwand
- 21, 22: Einlassventil
- 23, 24: Auslassventil
- 25: Verbrennungsluftkanal
- 26: Abgaskanal
- 27: Volumen/Bypasskanal
- 28, 29: Pfeile
- 30: Öffnung
- 31: Rohr
- 32: Blende
- 33: Gaszuführungsrohr
- 34: Luftzuführungsrohr
- 35: Gaszuführkanal
- 36: Luftzuführrohr
- 37: Rekuperatorrohr
- 38: Rohr
- 39: Kanal

## Patentansprüche

1. Brenner zum Beheizen abgeschlossenen Ofenräumen oder Innenräumen (3) von Strahlrohren (1),
mit einer Regeneratoranordnung (10), die zur regenerativen Abgas-Wärmerückgewinnung und Aufheizung von Verbrennungsluft unter Abgaswärmenutzung Regeneratoren (11-16) aufweist, die jeweils mindestens abwechselnd einen von einem Abgas-Strom und einem Verbrennungsluftstrom durchströmbaren Regeneratorkanal (17) aufweisen,
mit mindestens einer Luftdüse (7, 8), die mit der Regeneratoranordnung (10) in Verbindung steht, um aufgeheizte Verbrennungsluft in den Raum (3) zu leiten,
mit mindestens einem Bypasskanal (27), mittels dessen ein Abgas-Teilstrom unter Umgehung der Regeneratorkanäle (17) aus dem Raum (3) heraus zu einer Abgas-Absaugeinrichtung (6) leitbar ist,
**dadurch gekennzeichnet, dass** die Regeneratoren (11-16) in dem Bypasskanal (27) angeordnet sind, so dass der Abgas-Teilstrom unter Umgehung der Regeneratorkanäle (17) Außenflächen der Regeneratoren (11-16) berührt.

2. Brenner nach Anspruch 1, **dadurch gekennzeichnet, dass** die Regeneratoren (11-16) zylindrische Regeneratorpatronen sind.

3. Brenner nach Anspruch 1, **dadurch gekennzeichnet, dass** die Regeneratoranordnung (10) eine Wechselsteuerung (21-24) aufweist, mit der die Regeneratoren (11-16) einzeln oder gruppenweise zur Wärmeaufnahme in den Abgas-Strom oder zur Wärmeabgabe in den Verbrennungsluftstrom einschaltbar sind.

4. Brenner nach Anspruch 3, **dadurch gekennzeichnet, dass** alle Regeneratoren (11-16) in einem gemeinsamen Bypasskanal (27) angeordnet und somit sowohl während der Wärmeaufnahme als auch während der Wärmeabgabe von Abgas umspült sind.

5. Brenner nach Anspruch 1, **dadurch gekennzeichnet, dass** der Bypasskanal (27) mit einer Drosseleinrichtung (32) versehen ist.

6. Brenner nach Anspruch 5, **dadurch gekennzeichnet, dass** die Drosseleinrichtung (32) eine austauschbare Blende ist.

7. Verwendung des Brenners nach Anspruch 1, **dadurch gekennzeichnet, dass** die Luftdüse (7, 8) zur Erzeugung eines Verbrennungsluftstroms mit einer Austrittsgeschwindigkeit benutzt wird die im Hinblick auf den verwendeten Brennstoff zur Unterdrückung einer Flammenbildung genügt.

8. Verwendung nach Anspruch 7, **dadurch gekennzeichnet, dass** die Austrittsgeschwindigkeit auf mindestens 80 m/s, besser 100 m/s, und bevorzugterweise mindestens 150 m/s festgelegt ist.

9. Brenner nach Anspruch 1, **dadurch gekennzeichnet, dass** der Brenner mindestens einen Brennstoffkanal (33) aufweist, der durch den Brenner hindurch zu einer Brennstoffdüse (9) führt.

10. Brenner nach Anspruch 9, **dadurch gekennzeichnet, dass** der Brennstoffkanal (33) durch einen Luftkanal geführt ist.

11. Brenner nach Anspruch 9, **dadurch gekennzeichnet, dass** der Brennstoffkanal (33) mit dem Bypasskanal in Wärmeaustausch steht.

12. Brenner nach Anspruch 9, **dadurch gekennzeichnet, dass** der Brennstoffkanal (33) und der Bypasskanal (27) durch einen Gegenstrom-Wärmetauscher führend angeordnet sind.

13. Verfahren zur Beheizung geschlossener Ofenräume oder Innenräume (3) von Strahlrohren (1), durch flammenlose Oxidation eines Brennstoffs, wobei bei dem Verfahren:
vorgeheizte Luft mit hoher Geschwindigkeit als Strahl in den Raum (3) geleitet wird, um in dem Raum eine Rezirkulationsströmung zu erzeugen,
ein Brennstoffstrom in den Raum (3) geleitet wird,
aus dem Raum (3) von einer Abgas-Absaugeinrichtung ein Abgasstrom abgesaugt wird, der teilweise durch mindestens einen Regenerator (11) einer Regeneratoranordnung (10) hindurch geführt wird, der der Luftvorwärmung dient, und der teilweise durch einen Bypasskanal (27) geführt wird
wobei die Wärme des in dem Bypasskanal (27) geführten Abgas-Teilstroms eine Außenfläche des mindestens einen Regenerators (11) und/oder auf den Brennstoffstrom übertragen wird.

## Claims

1. Burner for heating closed furnace chambers or interiors (3) of radiant tubes (1), with a regenerator arrangement (10) having regenerators (11-16), which respectively have a regenerator duct (17), through which an exhaust gas flow and a combustion air flow can flow at least alternately, for regenerative exhaust gas heat recovery and heating of combustion air,
with at least one air nozzle (7, 8), which connects to the regenerator arrangement (10) to direct heated combustion air into the chamber (3),
with at least one bypass duct (27), by means of which an exhaust gas flow component can be directed out of the chamber (3) to an exhaust gas extraction means (6) bypassing the regenerator ducts (17),
**characterised in that**
the regenerators (11-16) are arranged in the bypass duct (27), so that the exhaust gas flow component touches outer surfaces of the regenerators (11-16) bypassing the regenerator ducts (17).

2. Burner according to claim 1, **characterised in that** the regenerators (11-16) are cylindrical regenerator cartridges.

3. Burner according to claim 1, **characterised in that** the regenerator arrangement (10) has a selective control (21-24), with which the regenerators (11-16) can be switched on individually or in groups to absorb heat in the exhaust gas flow or to transfer heat into the combustion air flow.

4. Burner according to claim 3, **characterised in that** all regenerators (11-16) are arranged in a common bypass duct (27) and are thus flushed by exhaust gas both during heat absorption and during heat transfer.

5. Burner according to claim 1, **characterised in that** the bypass duct (27) is provided with a throttle means (32).

6. Burner according to claim 5, **characterised in that** the throttle means (32) is a replaceable baffle.

7. Use of the burner according to claim 1, **characterised in that** the air nozzle (7, 8) is used to generate a combustion air flow with an exit speed, which is sufficient in accordance with the fuel used to suppress flame formation.

8. Use according to claim 7, **characterised in that** the exit speed is fixed to at least 80 m/s, better 100 m/s and more preferred at least 150 m/s.

9. Burner according to claim 1, **characterised in that** the burner has at least one fuel duct (33), which runs through the burner to a fuel nozzle (9).

10. Burner according to claim 9, **characterised in that** the fuel duct (33) is directed through an air duct.

11. Burner according to claim 9, **characterised in that** the fuel duct (33) stands in a heat exchange relationship with the bypass duct.

12. Burner according to claim 9, **characterised in that** the fuel duct (33) and the bypass duct (27) are arranged to run through a counterflow heat exchanger.

13. Process for heating closed furnace chambers or interiors (3) of radiant tubes (1) by flameless oxidation of a fuel, wherein in the process:
preheated air is directed at high speed into the chamber (3) as a stream to generate a recirculation flow in the chamber,
a fuel flow is directed into the chamber (3),
an exhaust gas flow is extracted from the chamber (3) by an exhaust gas extraction means and is partially directed through at least one regenerator (11) of a regenerator arrangement (10), which serves to preheat the air, and is partially directed through a bypass duct (27),
wherein the heat of the exhaust gas flow component guided in the bypass duct (27) is transferred to an outside surface of the at least one regenerator (11) and/or to the fuel flow.

## Revendications

1. Brûleur pour chauffer des volumes fermés de four ou des volumes internes (3) de tubes radiants (1), dans lequel :
- un système de régénération (10), présente des régénérateurs (11 - 16) servant à la récupération régénérative de la chaleur des gaz brûlés et au chauffage de l'air de combustion, chacun d'eux comportant au moins un canal de régénérateur (17) qui peut être traversé, en alternance, par un courant de gaz brûlés et par un courant d'air de combustion,
- au moins une tuyère à air (7, 8) est en liaison avec le système de régénération (10) pour amener dans le volume (3) de l'air de combustion réchauffé,
- au moins un canal de dérivation (27) permet, en contournant les canaux de régénérateur (17) de faire passer un courant partiel de gaz brûlés, du volume (3) à un dispositif d'aspiration de gaz brûlés (6),
ce brûleur étant **caractérisé en ce que** les régénérateurs (11 - 16) sont disposés dans le canal de dérivation (27), de sorte que le courant partiel de gaz brûlés, en contournant les canaux de régénération (17), est en contact avec la surface externe des régénérateurs (11 - 16).

2. Brûleur selon la revendication 1, **caractérisé en ce que** les régénérateurs (11 - 16) sont des cartouches cylindriques de régénérateur.

3. Brûleur selon la revendication 1, **caractérisé en ce que** le système le système de régénération (10) présente une commande alternative (21 - 24) par laquelle les régénérateurs (11 - 16) peuvent être, individuellement ou en groupe, mis en service pour recueillir de la chaleur dans le courant de gaz brûlés ou pour délivrer de la chaleur dans le courant d'air de combustion.

4. Brûleur selon la revendication 3, **caractérisé en ce que** tous les régénérateurs (11 - 16) sont disposés dans un canal commun de dérivation (27) de sorte qu'ils sont balayés pendant le prélèvement de chaleur et aussi pendant la délivrance de chaleur.

5. Brûleur selon la revendication 1, **caractérisé en ce que** le canal de dérivation (27) est équipé d'un dispositif d'étranglement (32).

6. Brûleur selon la revendication 5, **caractérisé en ce que** le dispositif d'étranglement (32) est un écran échangeable.

7. Utilisation du brûleur selon la revendication 1, **caractérisée en ce que** la tuyère à air (7, 8) est utilisée pour produire un courant d'air de combustion présentant une vitesse de sortie qui, compte tenu du carburant utilisé, suffit à empêcher la formation de flammes.

8. Utilisation du brûleur selon la revendication 7, **caractérisée en ce que** la vitesse de sortie est fixée à au moins 80 m/s, 100 m/s étant mieux et 150 m/s au moins ayant la préférence.

9. Brûleur selon la revendication 1, **caractérisé en ce qu'**il comporte au moins un canal de carburant (33) qui le traverse pour atteindre une tuyère de carburant (9).

10. Brûleur selon la revendication 9, **caractérisé en ce que** le canal de carburant (33) passe à travers un canal d'air.

11. Brûleur selon la revendication 9, **caractérisé en ce que** le canal de carburant (33) est en échange thermique avec le canal de dérivation (27).

12. Brûleur selon la revendication 9, **caractérisé en ce que** le canal de carburant (33) et le canal de dérivation (27) sont disposés de manière à passer à travers un échangeur thermique à contre-courant.

13. Procédé pour chauffer des volumes fermés de four ou des volumes internes (3) de tubes radiants (1) par oxydation sans flamme d'un carburant, selon lequel :
- de l'air préchauffé est conduit à vitesse élevée dans le volume (3) de manière à produire dans celui-ci un écoulement de recirculation,
- un courant de combustible est conduit dans le volume (3),
- du volume (3), un dispositif d'aspiration de gaz brûlés extrait un courant de gaz brûlés qui est amené en partie à travers au moins un régénérateur (11) d'un dispositif de régénération (10) servant à réchauffer l'air et en partie à travers un canal de dérivation (27), de sorte que la chaleur apportée par le courant partiel de gaz brûlés passant dans le canal de dérivation (27) est transmise à la surface externe d'au moins un régénérateur (11) et/ou au courant de carburant.
